# EUROPÄISCHE PATENTSCHRIFT

(11) **EP 0 450 288 B1**
(45) Veröffentlichungstag und Bekanntmachung des Hinweises auf die Patenterteilung: **28.06.1995**
(21) Anmeldenummer: 91102029.5
(22) Anmeldetag: 13.02.1991
(51) Int. Cl.: H02K 41/02, H02K 35/06

(54) **Elektrischer Linearmotor**
Electrical linear motor
Moteur électrique linéaire

(30) Priorität: 16.02.1990 DE 4005045
(43) Veröffentlichungstag der Anmeldung: 09.10.1991
(60) Teilanmeldung: 93113018.1
(73) Patentinhaber: Mehnert, Walter, Dr., D-85521 Ottobrunn (DE)
(72) Erfinder: Mehnert, Walter, Dr., D-85521 Ottobrunn (DE)
(74) Vertreter: Strasser, Wolfgang, Dipl.-Phys

(56) Entgegenhaltungen:
- CH-A- 251 509
- DE-A- 3 008 534
- FR-A- 513 515
- GB-A- 2 205 003
- US-A- 3 943 390
- US-A- 4 697 113
- Patent Abstracts of Japan, Vol 11, N0 209 (E521)(2656) July 7 1987 & JP-A-6231362 (Hitachi) 10.02.87

## Beschreibung

Die Erfindung betrifft einen elektrischen Linearmotor gemäß dem Oberbegriff von Anspruch 1.

Häufig werden elektrische Linearmotoren, die zur Erzeugung eines begrenzten Hubs dienen, nach dem Tauchspulenprinzip aufgebaut. Sie umfassen einen als höhlen, geraden Kreiszylinder ausgebildeten Permanentmagneten, in dessen zunächst nach innen gerichtetes und dann mit Hilfe einer magnetischen Rückschlußeinrichtung parallel zur Längsachse zu einem Stirnende des Permanentmagneten hin umgelenktes Feld eine elektrische Spule eintaucht, die sich je nach Richtung des sie durchfließenden Stroms näher zu dem vom Hauptteil des magnetischen Flusses durchsetzten Stirnende der Anordnung hin oder von diesem Stirnende weg bewegt. Bei einer solchen Anordnung läßt sich eine gleichmäßige Kraftwirkung nur so lange erzielen, solange die Spule praktisch über ihre gesamte axiale Länge vom Permanentmagneten umschlossen wird. Daher muß der Permanentmagnet in axialer Richtung um den gewünschten Hub länger als die Spule sein.

Daraus ergibt sich, daß derartige Linearmotoren hinsichtlich der Forderung, bei möglichst geringer Baugröße eine möglichst große Kraft zu erzeugen, nicht optimal sind.

Weiterhin ist aus der GB-A-2 205 003 ein der Bildung des Oberbegriffs von Anspruch 1 zugrundegelegter Linearmotor bekannt, der sich von den Motoren nach dem Tauchspulenprinzip dadurch unterscheidet, daß sich bei ihm nicht eine von Strom durchflossene Spule entweder allein oder gemeinsam mit einem sie durchsetzenden Kern aus ferromagnetischem Material relativ zum Feld einer Magnetanordnung bewegt. Stattdessen sind hier die Magnetanordnung, die aus einem hohlzylindrischen, senkrecht zu seiner Längsachse magnetisierten Permanentmagneten besteht, und die Spulenanordnung, die zwei hohlzylindrische, in Reihe geschaltete Teilspulen umfaßt, unbeweglich miteinander verbunden, wobei die beiden Teilspulen koaxial zum Permanentmagneten an dessen beiden Stirnenden so angeordnet sind, daß sie mit ihm einen gemeinsamen, durchgehenden Innenraum umschließen. In diesem Innenraum ist ein Kern aus ferromagnetischem Material gegen die Spulen-Magnet-Anordnung in Längsrichtung beweglich gelagert, der einen Spalt aufweist, der sich quer zur Bewegungsrichtung so erstreckt, daß der Kern im Bereich dieses Spaltes dem Magnetfluß einen Widerstand entgegensetzt, der größer ist als der magnetische Widerstand, den die zwischen der Spulen-Magnet-Anordnung und dem Kern vorhandenen Lagespalte bewirken, die vermittels einer auf die Außenseite des Kerns aufgebrachten Gleitbeschichtung gebildet sind. Bewegt sich der Kern mit seinem Spalt im Bereich zwischen den Enden des Permanentmagneten, so ändert sich hierdurch der die Spulen durchsetzende Magnetfluß. Wird also durch die hintereinander geschalteten Spulen ein Strom geschickt, so erfährt der Kern eine in Längsrichtung wirkende Kraft, die ihn je nach Polung des Stroms in etwa bis zu dem einen oder dem anderen Stirnende des Permanentmagneten bewegt.

Um die Magnetfelder ringförmig zu schließen, ist die Spulen-Magnet-Anordnung auf ihrer Außenseite von einem hohlzylindrischen Mantel aus ferromagnetischem Material umgeben, mit dem sie fest verbunden ist und der an seinen Stirnenden jeweils ein scheibenförmiges, ebenfalls ferromagnetisches Joch aufweist, durch dessen zentrale Öffnung sich der Kern hindurch so erstreckt, daß er mit seiner Gleitbeschichtung an der inneren Mantelfläche dieser Öffnung anliegt und so für seine Längsbewegung geführt wird.

Somit liegt der Erfindung die Aufgabe zugrunde, einen elektrischen Linearmotor der im Oberbegriff des Anspruchs 1 genannten Art so weiterzubilden, daß bei gleichbleibender abgebbarer Kraft die Baugröße verringert werden kann.

Zur Lösung dieser Aufgabe sieht die Erfindung die im Anspruch 1 zusammengefaßten Merkmale vor.

Um den magnetischen Widerstand zwischen dem beweglichen Element der Flußführungsanordnung und den Jochen trotz der etwas größeren Spalte so klein wie möglich zu halten, ist vorzugsweise vorgesehen, hier eine ferromagnetische Flüssigkeit insbesondere auf Ölbasis einzubringen. Hierdurch kann unter Beibehaltung eines kleinen Reibungskoeffizienten das Motorgehäuse nach außen abgedichtet werden.

Eine besonders kompakte Bauform läßt sich bei vorgegebener zu erzeugender Kraft dann erzielen, wenn die Anordnung so aufgebaut wird, daß möglichst geringe magnetische Streufelder auftreten. Diesem Zweck dienen insbesondere die in den Ansprüchen 2 bis 7 niedergelegten Merkmale.

Die durch die erfindungsgemäßen Maßnahmen erzielbare Baugrößenverminderung läßt sich besonders deutlich am Beispiel eines für einen begrenzten linearen Hub ausgelegten Elektromotors darlegen, gilt in entsprechender Weise aber auch für andere Bau- und Funktionsformen.

Bei herkömmlichen Linearmotoren nach dem Tauchspulenprinzip, die für einen begrenzten Hub gebaut sind, muß der Magnet um die Hubstrecke länger sein, als die zu ihm koaxial angeordnete Spule, damit sich die Spule in allen ihren bei einer Hubbewegung durchlaufenen Stellungen möglichst vollständig in Feldbereichen des Magneten befindet, die eine hohe Feldliniendichte aufweisen. Bei einem erfindungsgemäßen Elektromotor der in Rede stehenden Art muß dagegen der Magnet im wesentlichen die Länge des gewünschten Hubes besitzen, da sich der den Körper aus ferromagnetischem Material durchziehende Luftspalt zwischen den beiden axialen Enden des Magneten hin- und herbewegen kann. Die vom Strom durchflossene Spule kann ähnlich wie bei bekannten vergleichbaren Motoren konzentrisch zum Permanentmagneten, hier aber fest, angeordnet werden und besitzt dann die gleiche axiale Länge. Man erhält also eine Elektromotoranordnung, die in Bewegungsrichtung nur unwesentlich länger als der zu durchlaufende Hub ist.

Alternativ hierzu können statt einer Spule aber auch zwei Spulen vorgesehen und so angeordnet werden, daß sich der Magnet zwischen ihnen befindet. Wegen der besonderen Führung des erfindungsgemäßen Motors und der dadurch erzielten Leichtgängigkeit können auch diese Spulen erheblich kleiner und insbesondere kürzer als beim Stand der Technik ausgebildet werden, sodaß sich auch bei dieser Ausführungsform eine Baugrößenrerminderung ergibt.

Die kürzere Bauform für den Magneten hat weiterhin zur Folge, daß zur Erzielung gleicher Kraft der von ihm insgesamt ausgehende magnetische Fluß geringer ist. Damit können für die ferromagnetische Flußführungsvorrichtung wesentlich geringere Materialstärken vorgesehen werden, ohne daß die Gefahr einer magnetischen Sättigung besteht. Diese verringerten Materialstärken führen nochmals zu Baugrößenverminderungen insbesondere senkrecht zur Richtung der gewünschten Relativbewegung.

Ein besonderer Vorteil der beschriebenen Bauform besteht darin, daß das bewegliche Teil des Elektromotors der einfachste überhaupt denkbare Gegenstand, nämlich ein geschlitzter Eisenzylinder sein kann.

Dieser Vorteil bleibt auch dann erhalten, wenn das gegen die Spulen-Magnetanordnung bewegliche Element der die Anordnung umschließende Mantel aus ferromagnetischem Material ist, der von einem sich quer zur Bewegungsrichtung erstreckenden Spalt durchzogen wird. Somit kann der Mantel anstellte des Kerns oder gemeinsam mit dem Kern den Teil der Flußführungsanordnung bilden, der relativ zur Spulen-Magnetanordnung beweglich ist.

Vorteilhafte Weiterbildungen und Ausgestaltungen des erfindunsgemäßen Elektromotors sind in den Unteransprüchen niedergelegt.

Die Erfindung wird im folgenden anhand von Ausführungsbeispielen unter Bezugnahme auf die Zeichnung erläutert; in dieser zeigt:
- Fig. 1: einen für eine lineare Hubbewegung ausgebildeten Elektromotor gemäß dem bekannten Tauchspulenprinzip,
- Fig. 2: eine erste Ausführungsform eines für den gleichen linearen Hub ausgebildeten Elektromotores gemäß der Erfindung,
- Fig. 3: eine weitere für den gleichen linearen Hub ausgebildete Ausführungsform eines erfindungsgemäßen Elektromotors,
- Fig. 4: eine für den gleichen linearen Hub ausgelegte Ausführungsform, bei der die Spule geteilt ist, und
- Fig. 5: eine Anordnung aus zwei linearen Elektromotoren gemäß Fig. 4 mit einem gemeinsamen Kern aus ferromagnetischem Material.

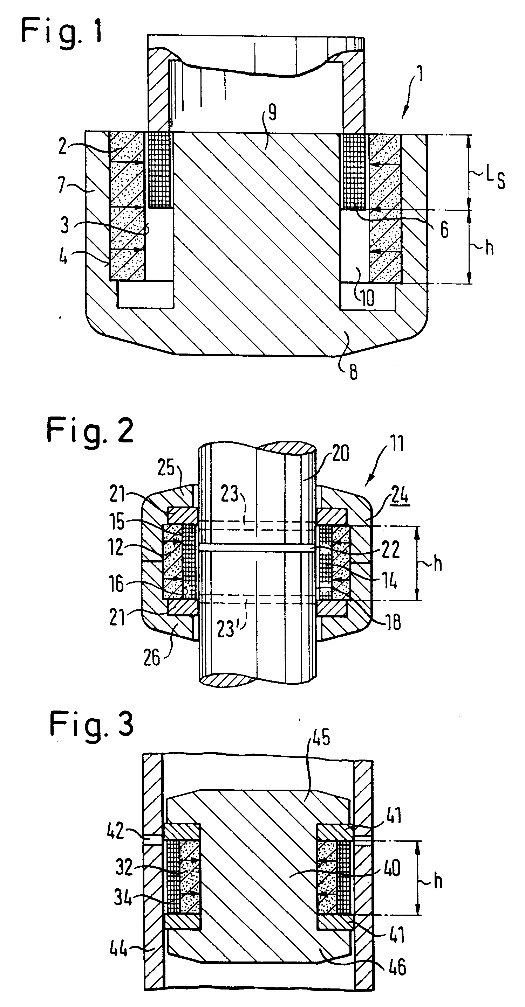

Der in Fig. 1 wiedergegebene Elektromotor 1, der nach dem Tauchspulenprinzip aufgebaut ist, umfaßt einen Permanentmagneten 2, der die Form eines hohlen, an beiden Stirnenden offenen, geraden Kreiszylinders besitzt und der so magnetisiert ist, daß beispielsweise sein magnetischer Südpol auf seiner Zylinderinnenfläche 3 und der magnetische Nordpol auf seiner Zylinderaußenfläche 4 liegen. Im Inneren des Permanentmagneten 2 ist eine elektrische Spule 6 angeordnet, die ebenfalls die Form eines hohlen, geraden Kreiszylinders aufweist und deren Außendurchmesser etwas kleiner als der Innendurchmesser des Permanentmagneten 2 ist. Die axiale Länge L_{S} der Spule 6 ist etwa halb so groß wie die axiale Länge des Permanentmagneten 2, so daß sich die Spule 6, wenn sie konzentrisch zum Permanentmagneten in dessen Innenraum angeordnet wird, in diesem Innenraum um einen Hub h hin- und herbewegen kann, der in etwa gleich der axialen Länge L_{S} der Spule 6 und der halben axialen Länge des Permanentmagneten 2 ist.

Um die Linien des Magnetflusses des Permanentmagneten 2 auf einem Weg mit möglichst geringem magnetischem Widerstand schließen zu können, umfaßt der Elektromotor 1 eine magnetische Rückschlußeinrichtung aus ferromagnetischem Material, die folgende Bestandteile besitzt: Einen Mantel 7 in Form eines hohlen, geraden Kreiszylinders, der die gleiche axiale Länge wie der Permanentmagnet 2 besitzt und diesen von außen her so umgibt, daß die Zylinderinnenfläche des Mantels 7 an der Zylinderaußenfläche 4 des Permanentmagneten 2 anliegt, eine Jochanordnung 8, die im wesentlichen die Form einer Kreisscheibe besitzt und die in Fig. 1 untere Stirnwand des Mantels 7 bildet, sowie einen Kern 9, der die Form eines geraden Kreiszylinders besitzt und sich von der Innenfläche der Jochanordnung 8 konzentrisch über die gesamte Länge des Permanentmagneten 2 bis zu dessen in Fig. 1 oberen Stirnende erstreckt. Die gesamte Rückschlußeinrichtung und damit sowohl der Mantel 7 als auch der Kern 9 sind mit dem Permanentmagneten 2 unbeweglich verbunden. Den relativ hierzu beweglichen Teil bildet die Spule 6, die sich in einem Hohlraum auf und ab bewegen kann, der zwischen der zylindrischen Außenfläche des Kerns 9 und der Zylinderinnenfläche 3 des Permanentmagneten 2 vorhanden ist und die Form eines geraden Kreiszylinderringes besitzt. Um diese Bewegung zu ermöglichen, sind zwischen dem Kern 9 und der Innenfläche der Spule 6 bzw. der inneren Zylinderfläche 3 des Permanentmagneten 2 und der Mantelaußenfläche der Spule 6 entsprechende Luftspalte freigelassen.

Die von der Innenfläche 3 des Permanentmagneten 2 radial nach innen verlaufenden Magnetflußlinien werden im wesentlichen im Kern 9 so umgelenkt, daß sie sich in Längsrichtung durch den Kern 9 zur Jochanordnung 8 erstrecken, die sie in radialer Richtung nach außen führt, wo sie vom Mantel 7 in Längsrichtung so weit zurückgeführt werden, daß sie über die Außenfläche 4 wieder in den Permanentmagneten 2 eintreten und sich dort schließen können.

Der Durchmesser des Kerns 9 muß dabei so bemessen sein, daß er in dem Bereich, in dem er in die Jochanordnung 8 einmündet, von dem ihn dort durchsetzenden gesamten magnetischen Fluß, der sich aus dem Fluß des Permanentmagneten 2 und dem der Spule 6 zusammensetzt, nicht in Sättigung getrieben wird. Die axiale Breite der Jochanordnung 8 kann demgegenüber deutlich geringer sein; sie ist ein Viertel des Kerndurchmessers. Da der Mantel 7 ebenfalls nicht in Sättigung getrieben werden soll, darf seine Querschnittsfläche nicht kleiner als die des Kerns 9 sein. Dies läßt sich allerdings mit einer wesentlich geringeren Materialstärke erreichen, da der Mantel 7 einen größeren radialen Abstand von der Symmetrieachse hat.

Die Spule 6 ist in Fig. 1 in der oberen Endlage ihres Hubes h wiedergegeben. Wird sie in dieser Stellung mit einem entsprechend gepolten Strom beaufschlagt, so bewegt sie sich in Fig. 1 bis zum Anschlag an der Jocheinrichtung 8 nach unten, wobei der vom Permanentmagneten 2 ausgehende und die Spule 6 durchsetzende magnetische Fluß ständig zunimmt. Wird in der unteren Endlage der die Spule 6 durchfließende Strom umgepolt, so bewegt sie sich wieder nach oben in die in Fig. 1 gezeigte Endlage, wobei der sie durchsetzende magnetische Fluß ständig abnimmt.

Bei dem in Fig. 2 wiedergegebenen Ausführungsbeispiel eines erfindungsgemäßen elektrischen Linearmotors 11, der ebenfalls für einen linearen Hub h ausgelegt ist, ist wieder ein Permanentmagnet 12 in Form eines hohlen, an beiden Enden offenen, geraden Kreiszylinders vorgesehen, der in der gleichen Weise magnetisiert ist, wie der Permanentmagnet 2 in Fig. 1, der aber nur etwa die Länge des benötigten Hubs h, also praktisch nur die halbe Länge des Permanentmagneten 2 besitzt.

Im Inneren des Permanentmagneten 12 und zu ihm konzentrisch ist eine ebenfalls die Form eines geraden hohlen Kreiszylinders besitzende Spule 14 vorgesehen, die etwa die gleiche axiale Länge wie der Permanentmagnet 12 besitzt, die mit ihrer Zylinderaußenfläche 15 an dessen Zylinderinnenfläche 16 anliegt und mit diesem fest und insbesondere in Längsrichtung der Anordnung unverschieblich verbunden ist.

Durch den von der Spule 14 umschlossenen, an beiden Enden offenen Innenraum 18 erstreckt sich ein Kern 20 aus ferromagnetischem Material, der mit Hilfe von zwei an den axialen Enden der Spule 14 angeordneten Führungsscheiben 21 aus nicht ferromagnetischem Material so gelagert ist, daß er sich in seiner Längsrichtung hin- und herbewegen kann. Zu diesem Zweck besitzt jede der beiden Führungsscheiben 21 eine zentrale Öffnung, deren Form an die Querschnittsform des Kerns 20 angepaßt ist und deren lichte Weite so bemessen ist, daß der Kern durch die beiden Scheiben 21 gleitend geführt wird.

Quer zu seiner Längsrichtung weist der Kern 20 einen "Luftspalt" 22, d.h. einen Querschnittsbereich auf, der zumindest zum größten Teil von einem Material (wozu auch Vakuum zu rechnen ist) erfüllt ist, das keine ferromagnetischen Eigenschaften aufweist. Dieser "Luftspalt" 22 stellt somit einen Bereich mit hohem magnetischen Widerstand dar, der dazu führt, daß die sich vom Permanentmagneten 12 radial nach innen erstreckenden und den Körper der Spule 14 durchsetzenden Magnetflußlinien, die bei der in Fig. 2 wiedergegebenen Stellung des "Luftspalts" 22 durch diesen in der Weise geteilt werden, daß die oberhalb dieses Spaltes verlaufenden Magnetflußlinien nach oben umgebogen und durch den ferromagnetischen Kern 20 zum oberen Stirnende der Anordnung weitergeführt werden, während die sich unterhalb des Spaltes 22 erstreckenden Magnetflußlinien nach unten umgelenkt und zum unteren Stirnende geführt werden. Dies hat zur Folge, daß dann, wenn sich je nach der Polung des die Spule 14 durchfließenden Stroms der Kern 20 aus der in Fig. 2 gezeigten oder einer ähnlichen Stellung nach oben oder nach unten verschiebt, Magnetflußlinien, die bisher mit einem Richtungssinn (beispielsweise nach unten) den Innenraum 18 der Spule 14 durchlaufen haben, gezwungen werden, diesen Richtungssinn umzukehren und den Innenraum 18 in entgegengesetzter Richtung zu durchlaufen. Dies bedeutet, daß bei gleicher Magnetfeldstärke aber halber Länge des Magneten 12 die pro Längeneinheit der Verschiebung des Kerns 20 auftretende zeitliche Magnetflußänderung durch die Spule 14 genau so groß ist wie beim Ausführungsbeispiel gemäß Fig. 1. Damit ergibt sich bezogen auf einen gleich langen Magneten eine mehr als doppelt so große Kraft.

Bei dem Ausführungsbeispiel nach Fig. 2 bewegt sich der Spalt 22 zwischen zwei durch gestrichelte Linien angedeuteten Endlagen 23,23′, von denen jede dadurch definiert ist, daß die in Fig. 2 horizontale Spalt-Mittellinie mit der oberen bzw. unteren Endkante der Spule 14 zusammenfällt. Man sieht, daß bei einem derart aufgebauten Motor sowohl die Spule 14 als auch der in etwa gleich lange Magnet 12 lediglich die Länge des gewünschten Hubes h besitzen müssen. Es ergibt sich somit in axialer Richtung eine Minimierung der Baugröße.

Die Rückführung des vom Permanentmagneten 12 radial nach innen ausgehenden und im Kern 20 in Längsrichtung umgelenkten Magnetflusses erfolgt auch hier mit Hilfe eines den Magneten 12 von außen umschließenden Mantels 24 und einer den Kern 20 mit dem Mantel 24 in radialer Richtung magnetisch verbindenden Jochanordnung, die hier aus zwei Jochen 25, 26 besteht, die im wesentlichen die Form von sich im Querschnitt radial nach außen verjüngenden Kreisscheiben mit jeweils einer zentralen durchgehenden Öffnung besitzen, von denen die eine am oberen und die andere am unteren Stirnende des Motors 11 angeordnet ist. Die beiden Joche 25, 26 sind mit dem Mantel 24 fest verbunden und bestehen wie er aus einem ferromagnetischen Material. Die Durchmesser der das Hindurchtreten des Kerns 20 durch die Joche 25, 26 ermöglichenden zentralen Öffnungen sind so bemessen, daß der zwischen dem Kern 20 und den Jochen 25, 26 gebildete Luftspalt zwar klein im Vergleich zum Spalt 22, aber groß im Vergleich zu den gegenüber den Führungsscheiben 21 bestehenden Luftspalten ist. Auf diese Weise wird erreicht, daß die aufgrund von Exzentrizitäten der Führung zwischen den Jochen 25, 26 und dem Kern 20 auftretenden Reibungskräfte sehr klein gehalten werden. Die Weite des Luftspaltes, der zwischen dem Kern 20 und dem ihn umgebenden Magneten 12 vorhanden ist, ist größer als die Weite der zu den Führungsscheiben 21 vorhandenen Luftspalte und insbesondere größer als die Weite der Luftspalte zwischen dem Kern 20 und den Jochen 25 und 26. Der kleinste Spalt ist zwischen den Führungsscheiben 21 und dem Kern 20 vorhanden. Die Führungsscheiben 21 vermindern dabei nicht nur die Exzentrizitätskraft sondern füllen die notwendigen Räume zwischen den Jochen 25, 26 und dem Magneten 12 aus.

Da bei der erfindungsgemäßen Ausführungsform gemäß Fig. 2 der Magnet 12 zur Erzielung des Hubes h nur die halbe Länge des Permanentmagneten aus Fig. 1 besitzen muß, ist auch der von ihm ausgehende magnetische Fluß bei gleicher Magnetstärke nur halb so groß. Bei dem Ausführungsbeispiel nach Fig. 2 muß der Kern 20 dann, wenn sich der Spalt 22 in einer der beiden Endlagen befindet, den gesamten magnetischen Fluß des Magneten 12 in Längsrichtung zu dem dem Spalt 22 gegenüberliegenden Joch 25 oder 26 hin führen, und weil der Spulenfluß bei beiden Ausführungsformen der Fig. 1 und 2 an den hochbelasteten Teilen des Kerns etwa gleich ist, muß der Durchmesser des Kerns 20 maximal nur 1/√2 mal so groß sein wie beim Ausführungsbeispiel nach Fig. 1. Es läßt sich also durch die erfindungsgemäße Anordnung bei gleicher Kraft nicht nur eine Verkürzung sondern auch eine merkliche Reduzierung der Baugröße senkrecht zur Längsrichtung erzielen.

Entsprechendes gilt auch für die Ausführungsform nach Fig. 3, die wieder für die Erzielung eines Hubes h ausgelegt ist. Auch hier besitzen der Magnet 32 und die Spule 34 die Form von hohlen, geraden Kreiszylindern gleicher axialer Länge. Anders als beim Ausführungsbeispiel nach Fig. 2 weist hier allerdings die Spule 34 einen Innendurchmesser auf, der gleich dem Außendurchmesser des Permanentmagneten 32 ist, so daß im zusammengebauten Zustand die Spule 34 den Permanentmagneten 32 umschließt. Diese beiden Bauteile sind wieder in Längsrichtung unverschieblich miteinander verbunden. An den beiden Stirnenden der Spulen-Magnet-Anordnung sind wieder zwei nicht ferromagnetische Führungsscheiben 41 vorgesehen, die auch zur Lagerung des gegen den Rest der Anordnung verschieblichen Mantels 44 dienen. Dieser Mantel besteht ebenso wie der Kern 40, der mit den beiden Jochen 45, 46 und mit der Spulen-Magnet-Anordnung in Längsrichtung unverschieblich verbunden ist, aus ferromagnetischem Material. Der in Längsrichtung verschiebliche Mantel 44 weist hier einen quer zur Bewegungsrichtung verlaufenden "Luftspalt" 42 auf, der, wie oben für den Spalt 22 beschrieben, zumindest zum überwiegenden Teil mit irgendeinem nicht ferromagntischem Material ausgefüllt ist. Der Mantel 44 gleitet mit seiner inneren Zylinderfläche auf den Außenflächen der Führungsscheiben 41 und ist von den Jochen 45, 46 und der Spule 34 in der gleichen Weise durch Luftspalte getrennt, wie dies oben für den Kern 20 beschrieben wurde. Der Mantel 44 kann sich zwischen zwei Endlagen hin- und herbewegen, die dadurch, definiert sind, daß die in Fig. 3 waagrecht verlaufende Mittellinie des Spaltes 42 mit dem oberen bzw. unteren Ende der Spulen-Magnet-Anordnung fluchtet. Die Funktionsweise dieser Ausführungsform ist die gleiche wie bei der Ausführungsform nach Fig. 2. Der magnetische Fluß verläuft ebenso, wie dies oben beschrieben wurde.

Die in Fig. 3 gezeigte Ausführungsform hat gegenüber dem Beispiel aus Fig. 2 den Vorteil, daß die Reibung, die bei exzentrischer Lagerung durch unsymmetrisch angreifende Magnetkräfte zwischen den Jochen und dem beweglichen Körper auftritt, wegen der im größeren radialen Abstand geringeren Magnetfeldstärke entsprechend kleiner ist.

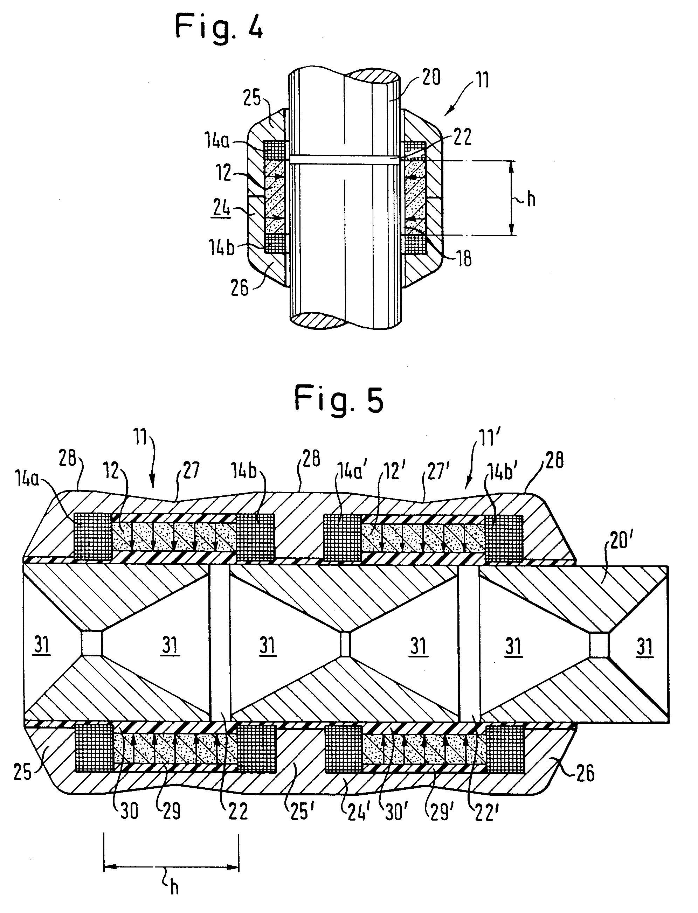

Bei der in Fig. 4 gezeigten Ausführungsform, die einen dem Beispiel aus Fig. 2 ähnlichen Aufbau besitzt und bei der gleiche Teile mit den selben Bezugszeichen bezeichnet sind, ist der Außendurchmesser dadurch weiter reduziert, daß die Spule 14 nicht konzentrisch zum Magneten 12 angeordnet sondern in zwei elektrisch seriell oder parallel betreibbare Teile 14a, 14b aufgeteilt ist. Dabei werden die an den Stirnenden des Magneten 12 zwischen diesem und den Jochen 25, 26 der magnetischen Rückschlußeinrichtung erforderlichen nicht ferromagnetischen Hohlräume zur Unterbringung der beiden Teilspulen 14a, 14b benutzt. Diese Lösung hat den Vorteil, daß der Magnet 12 neben der auch bei den anderen Ausführungsformen gemäß der Erfindung vorhandenen minimalen Länge nun auch radial minimiert ist, weil der magnetische Widerstand zwischen Mantel 24 und Kern 20 im wesentlichen nur noch vom Magneten 12 bestimmt ist. Daraus ergibt sich, daß die Feldstärke erhöht und damit der Strom der Spule reduziert werden kann. Im übrigen vermindert sich der Durchmesser des Kerns 20 weiter, weil durch die Teilung der Spule 14 gegenüber den vorausgehenden Ausführungsbeispielen die Hälfte des Spulenquerflusses entfällt. Die Kanten des Luftspaltes werden dabei vorzugsweise abgerundet.

Auch bei dieser Variante kann eine Ausführungsform realisiert werden, bei der entsprechend der Fig. 3 ein einen Luftspalt aufweisender Mantel gegen den Rest der Anordnung verschiebbar gelagert ist.

Dies gilt in gleicher Weise auch für das in Fig. 5 gezeigte Ausführungsbeispiel, bei dem zwei Elektromotoren 11, 11′ der in Fig. 4 dargestellten Art zu einer einheitlichen Elektromotoranordnung verbunden sind. Somit sind hier zwei gleichdimensionierte Permanentmagneten 12, 12′ und zwei gleichdimensionierte Spulen vorhanden, von denen jede in zwei Teilspulen 14a, 14b und 14a′, 14b′ aufgeteilt ist. Die Ausbildung und Anordnung dieser Magneten und Spulen ist genauso, wie dies oben unter Bezugnahme auf Fig. 4 beschrieben wurde, so daß hier auf eine Wiederholung verzichtet werden kann.

Die Magneten 12, 12′ und die Spulen 14a, 14b und 14a′, 14b′ sind unbeweglich miteinander verbunden und so angeordnet, daß ihre Längsachsen miteinander fluchten. Dadurch kann sich durch die in etwa kreiszylindrischen Innenräume beider Linearmotoren 11, 11′ ein gemeinsamer Kern 20′ erstrecken, der zwei zu seiner Längsrichtung quer verlaufende Spalte 22, 22′ aufweist. Der axiale Abstand dieser beiden Spalte 22, 22′ ist gleich dem axialen Abstand der beiden Elektromotoren 11, 11′, der beispielsweise durch den axialen Abstand der in Fig. 5 rechten Stirnflächen der beiden Permanentmagnete 12, 12′ definiert ist. Der Kern 20′ weist sechs kegelstumpfförmige Ausnehmungen 31 auf, die sich koaxial zu seiner Längsachse von seinen Stirnflächen bzw. von den beiden radial verlaufenden Spalten 22, 22′ so in ihn hineinerstrecken, daß ihre verjüngten Enden aufeinander zu weisen. Die Ausnehmungen 31 dienen der Gewichts- und Materialersparnis und sind so dimensioniert, daß das verbleibende ferromagnetische Material des Kerns 20′ überall ausreichend dick ist, um von dem maximalen Magnetfluß, der es in irgend einer Stellung des Kerns 20′ durchsetzen kann, in die Sättigung getrieben zu werden.

Die Spulen-Magnet-Anordnungen beider Elektromotoren 11, 11′ sind von einem gemeinsamen Mantel 24′ aus ferromagnetischem Material umgeben, der zusammen mit den Jochen 25, 25′, 26 für ein ringförmiges Schließen der Magnetflußlinien mit einem geringen magnetischen Widerstand sorgt, wie dies auch für die vorangehenden Ausführungsbeispiele beschrieben wurde.

Es sei darauf hingewiesen, daß bei dieser Anordnung der magnetische Fluß, der durch das mittlere, beiden Elektromotoren 11, 11′ gemeinsame Joch 25′ hindurchtritt, für alle Stellungen der beiden Spalte 22, 22′ beim Durchlaufen des Hubes h ungefähr gleich bleibt und etwa die Größe des maximalen Magnetflusses durch eines der beiden außenliegenden Joche 25, 26 erreicht. Das mittlere Joch 25′ kann also die gleiche axiale Länge wie eines der Außenjoche 25, 26 aufweisen, ohne daß die Gefahr besteht, daß es in die magnetische Sättigung getrieben wird. Obwohl die in Fig. 5 gezeigte Anordnung zwei Elektromotoren 11, 11′ der in Fig. 4 wiedergegebenen Art umfaßt, ist ihre axiale Länge erheblich weniger als doppelt so lang wie die axiale Länge eines einzelnen Elektromotors 11, weil sich auch die Windungszahl der Spulen im Vergleich zu einem gleichstarken Einzelmotor kaum verändert.

Sinn dieser Doppelanordnung ist es, die zwischen Stator und beweglichem Motorteil wirkende Kraft bei sonst gleichbleibenden Bedingungen zu verdoppeln. Zwar kann man eine solche Kraftverdoppelung auch dadurch erreichen, daß man bei einem Einzelmotor 11 gemäß Fig. 4 einen entsprechend stärkeren Permanentmagneten 12 verwendet. Wegen des vergrößerten magnetischen Flusses würde dies aber einen größeren Kerndurchmesser, in axialer Richtung vergrößerte Joche und einen dickeren Mantel erfordern. Für den dickeren Magneten steigt dann noch der Außendurchmesser der Anordnung vor allem dann überproportional an, wenn man preisgünstige Magneten verwenden will. Je nach Anwendungsfall kann es also durchaus vorteilhaft sein, statt eines Einzelmotors 11 mit doppelt so kräftigem Permanentmagneten 12 die in Fig. 5 gezeigte Doppelanordnung zu verwenden, um ein preisgünstiges Endprodukt zu erzielen. Es können in der hier gezeigten Weise auch mehr als zwei lineare Elektromotoren 11, 11′ hintereinander angeordnet werden, wobei dann für jedes zwischen zwei benachbarten Motoren liegende Joch das gilt, was oben für das Joch 25′ gesagt wurde.

In Abweichung von Fig. 4 besitzt der Mantel 24′ in Fig. 5 jeweils in der Mitte 27, 27′ der axialen Länge der beiden Permanentmagnete 12, 12′ eine etwas geringere Wandstärke als zu den Endbereichen 28 hin. Diese Material- und Gewichtseinsparung, die auch bei allen vorausgehend beschriebenen Ausführungsbeispielen möglich ist, kann des- wegen vorgenommen werden, weil in diesen zentralen Bereichen ein geringerer Magnetfluß geleitet werden muß als in den Endzonen 28. Weiterhin sind in Fig. 5 die ringförmigen Freiräume zwischen der Innenseite des Mantels 24′ und den äußeren Mantelflächen der Permanentmagnete 12, 12′ sowie zwischen den inneren Mantelflächen der Permanentmagnete 12, 12′ und der Mantelfläche des Kerns 9′ mit in Fig. 4 nicht dargestellten, dort aber ebenso einsetzbaren Kunststoffkörpern 29, 29′ und 30, 30′ ausgefüllt, von denen die inneren Kunststoffkörper 30, 30′ zur Lagerung und Führung des Kerns 9′ dienen. In den Spalten zwischen den Jochen 25, 25′ und 26 und dem Kern 9′ kann wieder zur Erzielung der oben beschriebenen Vorteile eine ferromagnetische Flüssigkeit vorgesehen werden.

Es sei nochmals betont, daß außer den bisher geschilderten Elektromotoren weitere Realisierungsmöglichkeiten des Erfindungsgedankens bestehen.

So können beispielsweise quer zur Bewegungsrichtung verlaufende "Luftspalte" sowohl im Kern als auch im Mantel in derselben Querschnittsebene vorgesehen und diese beiden Teile für eine gemeinsame Relativbewegung zur Spulen-Magnet-Anordnung mechanisch miteinander verbunden werden. Der Vorteil einer solchen Anordnung liegt darin, daß auch der Spulenhauptfluß halbiert wird, wodurch der Kerndurchmesser weiter reduziert werden kann. Unter Spulenhauptfluß wird im vorliegenden Zusammenhang der Magnetfluß verstanden, der von der gesamten Spule über den gesamten Kern, die Joche und den gesamten Mantel getrieben wird. Der Spulenquerfluß ist dagegen ein Magnetfluß, der von der Spule oder Teilen von ihr über einen Teil des Kerns, über ein Joch, über einen Teil des Mantels und zumindest über einen Teil des Magneten getrieben wird.

Es ist weiterhin möglich, mehrere voneinander unabhängig ansteuerbare Spulen-Magnet-Anordnungen hintereinander so anzuordnen, daß ihre Längsachsen miteinander fluchten und/oder im Kern bzw. im Mantel mehrere Schlitze vorzusehen, um auf diese Weise lange Kerne bzw. Mäntel über große Strecken hinweg zu bewegen. Auch können mehrere Spulen-Magnet-Anordnungen beispielsweise mit gebogenen Längsachsen auf einer Kreisbahn angeordnet und zur Beschleunigung eines ringförmigen Kerns verwendet werden, wodurch man einen Rotationsmotor erhält. Prinzipiell kann jeder dieser Motoren auch als Generatoren verwendet werden, d.h. mechanische Arbeit in elektrische Energie umwandeln.

Alternativ zu den beschriebenen Ausführungsformen kann die Spulenanordnung auch mehrere Spulen umfassen, von denen dann beispielsweise zwei an den Stirnenden der Magnetanordnung positioniert werden, während eine dritte den Magneten umschließt oder von diesem umschlossen wird.

Die in den Fig. 2 und 3 dargestellten Permanentmagnete 12, 32 können auch durch Elektromagnete ersetzt werden. Auch ist es prinzipiell möglich, in Fig. 2 den Permanentmagneten 12 innerhalb der Spule 14 und in Fig. 3 den Permanentmagneten 32 außerhalb der Spule 34 anzuordnen. Bei Fig. 3 führt dies zu einem vorteilhaften geringeren Ohmschen Widerstand der Spule 34. Die Ausführungsformen, bei denen die Spule 14 bzw. 34, wie in den Fig. 2 und 3 dargestellt, zwischen dem Permanentmagneten 12 bzw. 32 und dem den Spalt 22 bzw. 42 aufweisenden Körper 20 bzw. 44 liegt, haben dagegen den Vorteil, daß hier keine Gefährdung des Permanentmagneten durch die an den Spaltkanten auftretenden hohen Feldstärken erfolgt.

Die erfindungsgemäßen Linearmotoren können entweder so betrieben werden, daß ihnen permanent ein Gleichstrom zugeführt wird, der entsprechend der gewünschten Bewegungsrichtung gepolt ist. Alternativ hierzu ist es auch möglich, ihnen die für das Zurücklegen einer bestimmten Wegstrecke erforderliche elektrische Energie in zeitlich voneinander getrennten und gepolten Einzelimpulsen zuzuführen.

## Patentansprüche

1. Elektrischer Linearmotor mit
- einer Spulenanordnung, die wenigstens eine Spule (14; 34; 14a, 14b; 14a, 14b, 14a′, 14b′) umfaßt, die einen durchgehenden Innenraum umschließt und durch die zur Erzeugung einer Linearbewegung zwischen einem Stator und einem Reaktionsteil des Motors ein elektrischer Strom fließt,
- einer Magnetanordnung, die mit der Spulenanordnung zumindest in Richtung der zu erzeugenden Linearbewegung unbeweglich verbunden ist und wenigstens einen Magneten (12; 32; 12, 12′) umfaßt, der in Form eines in Bewegungsrichtung länglichen Körpers ausgebildet ist, dessen Magnetisierungsrichtung in etwa senkrecht zu seiner Längsachse verläuft, der einen durchgehenden Innenraum umschließt und der zum Innenraum der wenigstens einen Spule (14; 34; 14a, 14b; 14a, 14b, 14a′, 14b′) so koaxial angeordnet ist, daß sein Magnetfeld die Spulenanordnung durchsetzt,
- sowie mit einer Flußführungsanordnung, die folgende Elemente umfaßt:
-- einen Kern (20; 40; 20′), der zumindest teilweise aus ferromagnetischem Material besteht und sich durch den Innenraum der wenigstens einen Spule (14; 34; 14a, 14b; 14a, 14b, 14a′, 14b′) und den Innenraum des wenigstens einen Magneten (12; 32; 12, 12′) erstreckt,
-- einen Mantel (24; 44; 24′) in Form eines in Bewegungsrichtung länglichen Körpers, der zumindest teilweise aus ferromagnetischem Material besteht und die Spulen- und die Magnetanordnung von außen her umschließt, sowie
-- wenigstens zwei Joche (25, 26; 25, 25′, 26′; 45, 46) aus ferromagnetischem Material, die quer zur Bewegungsrichtung eine Magnetflußverbindung zwischen Kern (20; 40; 20′) und Mantel (24; 44; 24′) herstellen,
wobei wenigstens eines der beiden von Kern (20; 40; 20′) und Mantel (24; 44; 24′) gebildeten Elemente der Flußführungsanordnung bezüglich der Spulen- und der Magnetanordnung in Richtung der Linearbewegung beweglich gelagert und von den Jochen (25, 26; 25, 25′, 26; 45, 46) durch Spalte getrennt ist und wenigstens einen quer zur Richtung der Linearbewegung verlaufenden Spalt (22; 42; 22, 22′) aufweist, der mit Material kleiner magnetischer Permeabilität erfüllt ist, so daß er einen größeren magnetischen Widerstand bildet als die Spalte zu den Jochen (25, 26; 25, 25′, 26′; 45, 46) und der so angeordnet ist, daß sich aufgrund seiner Bewegung zur Spulen- und Magnetanordnung der magnetische Fluß in der Spulenanordnung ändert,
dadurch **gekennzeichnet**, daß das wenigstens eine bewegliche Element der Flußführungsanordnung bezüglich der Spulen- und Magnetanordnung mit Hilfe von Führungselementen (21; 41; 30, 30′) aus einem nicht magnetischen Material geführt ist, die von dem beweglichen Element durch Luftspalte getrennt sind, die klein im Vergleich zu den zwischen dem beweglichen Element und den Jochen (25, 26; 25, 25′, 26′; 45, 46) vorhandenen Spalten sind.

2. Linearmotor nach Anspruch 1, dadurch **gekennzeichnet**, daß an den Übergangsstellen zwischen dem beweglichen Element der Flußführungsanordnung und den Jochen eine ferromagnetische Flüssigkeit, vorzugsweise auf Ölbasis eingebracht ist.

3. Linearmotor nach Anspruch 1 oder 2, dadurch **gekennzeichnet**, daß die Spulenanordnung eine einzige Spule (14) umfaßt, die in Form eines in Bewegungsrichtung länglichen Körpers ausgebildet ist, und daß die Magnetanordnung einen einzigen Magneten (12) umfaßt, der die Spule (14) von außen umschließt.

4. Linearmotor nach Anspruch 1 oder 2, dadurch **gekennzeichnet**, daß die Spulenanordnung eine einzige Spule (34) umfaßt, die in Form eines in Bewegungsrichtung länglichen Körpers ausgebildet ist, und daß die Magnetanordnung einen einzigen Magneten (32) umfaßt, der von der Spule (34) von außen umschlossen wird.

5. Linearmotor nach einem der Ansprüche 3 oder 4, dadurch **gekennzeichnet**, daß sowohl die Spule (14; 34) als auch der Magnet (12; 32) als gerader Hohlzylinder mit kreisförmigem Innen- und Außenquerschnitt ausgebildet ist.

6. Linearmotor nach Anspruch 1 oder 2, dadurch **gekennzeichnet**, daß die Magnetanordnung aus einem einzigen Magneten (12; 12, 12′) besteht, daß die Spulenanordnung zwei gleichsinnig ansteuerbare Spulen (14a, 14b; 14a, 14b, 14a′, 14b′) umfaßt, die sich an den Magneten (12; 12, 12′) an dessen beiden Stirnenden so anschließen, daß die Innenräume der Spulen mit dem Innenraum des Magneten zumindest in etwa fluchten.

7. Linearmotor nach Anspruch 6, dadurch **gekennzeichnet**, daß jede der beiden Spulen (14a, 14b; 14a, 14b, 14a′, 14b′) und der Magnet (12; 12, 12′) als gerade Hohlzylinder mit kreisförmigen Innen- und Außenquerschnitten ausgebildet sind.

8. Linearmotor nach einem der Ansprüche 1 bis 7, dadurch **gekennzeichnet**, daß der Kern (20, 20′) bezüglich der Spulen- und Magnetanordnung in Richtung der Linearbewegung beweglich gelagert ist und daß die Joche (25, 26; 25, 25′, 26) mit dem Mantel (24; 24′) fest verbunden sind, der mit der Spulen- und Magnetanordnung zumindest in Richtung der Linearbewegung unbeweglich verbunden ist.

9. Linearmotor nach einem der Ansprüche 1 bis 7, dadurch **gekennzeichnet**, daß der Mantel (44) bezüglich der Spulen- und Magnetanordnung beweglich gelagert ist und daß die Joche (45, 46) mit dem Kern (40) fest verbunden sind, der mit der Spulen- und Magnetanordnung zumindest in Richtung der Linearbewegung unbeweglich verbunden ist.

10. Linearmotor nach einem der Ansprüche 1 bis 7, dadurch **gekennzeichnet**, daß der Kern und der Mantel bezüglich der Spulen- und Magnetanordnung zumindest in Richtung der Linearbewegung beweglich gelagert sind und daß die Joche mit der Spulen- und Magnetanordnung zumindest in Richtung der Linearbewegung unbeweglich verbunden sind.

11. Linearmotor nach einem der vorhergehenden Ansprüche, dadurch **gekennzeichnet**, daß die Magnetanordnung von Permanentmagneten gebildet wird.

12. Linearmotor nach einem der vorhergehenden Ansprüche, dadurch **gekennzeichnet**, daß der wenigstens eine Spalt (22; 42; 22′) in dem gegen die Spulen- und Magnetanordnung beweglichen Element der Flußführungsvorrichtung mit einem festen Material niederer magnetischer Permeabilität gefüllt ist, das mit dem beweglichen Element einen Gesamtkörper mit kontinuierlichen Außenkonturen bildet.

13. Linearmotor nach einem der vorhergehenden Ansprüche, dadurch **gekennzeichnet**, daß Materialstärke und Form des Kerns, der Joche und des Mantels in den verschiedenen Querschnittsbereichen an den den jeweiligen Querschnittsbereich maximal durchsetzenden magnetischen Fluß so angepaßt sind, daß bei möglichst geringem Materialbedarf eine Sättigung vermieden wird.

14. Linearmotor nach Anspruch 13, dadurch **gekennzeichnet**, daß der Kern (20′) kegelstumpfförmige Ausnehmungen (31) aufweist, die sich koaxial zu seiner Längsachse von seinen Stirnflächen und dem radial verlaufenden Spalt (22, 22′) so in ihn hineinerstrecken, daß ihre verjüngten Enden aufeinander zuweisen.

15. Linearmotoranordnung, die aus wenigstens zwei Linearmotoren (11, 11′) nach einem der vorhergehenden Ansprüche besteht, dadurch **gekennzeichnet**, daß die Spulen- und Magnetanordnungen der wenigstens zwei Linearmotoren (11, 11′) alle zumindest in Richtung der Linearbewegung unbeweglich miteinander verbunden sind, daß wenigstens ein für die wenigstens zwei Linearmotoren gemeinsames bewegliches Element der Flußführungsanordnung vorgesehen ist, das für jeden der Linearmotoren (11, 11′) einen Spalt (22, 22′) aufweist, und daß die Spulenanordnung der wenigstens zwei Linearmotoren (11, 11′) so angesteuert werden, daß die zwischen der Spulen- und Magnetanordnung eines jeden Linearmotors (11, 11′) und dem gemeinsamen beweglichen Element der Flußführungsanordnung auftretenden Kräfte zur Erzeugung einer Linearbewegung gleichsinnig wirken.

16. Linearmotoranordnung nach Anspruch 15, dadurch **gekennzeichnet**, daß die wenigstens zwei Linearmotoren (11, 11′) einen gemeinsamen Mantel (24′) aufweisen und daß wenigstens eines (25′) der Joche (25, 25, 26) zwei Linearmotoren (11, 11′) zugeordet ist.

17. Verwendung eines Linearmotors nach einem der vorhergehenden Ansprüche als elektrischer Generator.

## Claims

1. An electric linear motor comprising:
- a winding arrangement which includes at least one winding (14; 34; 14a, 14b; 14a, 14b, 14a′, 14b′), which encloses a continuous internal space and through which an electric current flows to produce a linear movement between a stator and a reaction portion of the motor,
- a magnet arrangement which is immovably connected to the winding arrangement at least in the direction of the linear movement to be produced, and includes at least one magnet (12; 32; 12, 12′) which is in the form of a body which is elongate in the direction of movement and whose magnetisation direction extends approximately perpendicularly to its longitudinal axis, which encloses a continuous internal space and which is arranged coaxially relative to the internal space of the at least one winding (14; 34; 14a, 14b; 14a, 14b, 14a′, 14b′) so that its magnetic field passes through the winding arrangement, and
- a flux guide arrangement including the following elements:
-- a core (20; 40; 20′) which at least partially comprises ferromagnetic material and extends through the internal space of the at least one winding (14; 34; 14a, 14b; 14a, 14b, 14a′, 14b′) and the internal space of the at least one magnet (12; 32; 12, 12′),
-- a casing (24; 44; 24′) in the form of a body which is elongate in the direction of movement and which at leaast partially comprises ferromagnetic material and which encloses the winding and the magnet arrangements from the outside, and
-- at least two yokes (25, 26; 25, 25′, 26′; 45, 46) of ferromagnetic material which transversely to the direction of movement produce a magnetic flux connection between the core (20; 40; 20′) and the casing (24; 44; 24′),
wherein at least one of the two elements of the flux guide arrangement, which are formed by the core (20; 40; 20′) and the casing (24; 44; 24′) is mounted movably relative to the winding and the magnet arrangements in the direction of the linear movement and is separated by gaps from the yokes (25, 26; 25, 25′, 26; 45, 46) and has at least one gap (22; 42; 22, 22′) which extends transversely to the direction of the linear movement and which is filled with material of low magnetic permeability so that it forms a larger magnetic resistance than the gaps relative to the yokes (25, 26; 25, 25′, 26′; 45, 46) and which is so arranged that by virtue of its movement with respect to the winding and the magnet arrangements the magnetic flux in the winding arrangement alters,
characterised in that the at least one movable element of the flux guide arrangement is guided with respect to the winding and the magnet arrangements by means of guide elements (21; 41; 30, 30′) of a non-magnetic material, which are separated from the movable element by air gaps which are small in comparison with the gaps between the movable element and the yokes (25, 26; 25, 25′, 26′; 45, 46).

2. A linear motor according to claim 1 characterised in that a ferromagnetic fluid, preferably on an oil basis, is included at the transition locations between the movable element of the flux guide arrangement and the yokes.

3. A linear motor according to claim 1 or claim 2 characterised in that the winding arrangement includes a single winding (14) which is in the form of a body which is elongate in the direction of movement and that the magnet arrangement includes a single magnet (12) which embraces the winding (14) from the outside.

4. A linear motor according to claim 1 or claim 2 characterised in that the winding arrangement includes a single winding (34) which is in the form of a body which is elongate in the direction of movement and that the magnet arrangement includes a single magnet (32) which is embraced by the winding (34) from the outside.

5. A linear motor according to one of claims 3 and 4 characterised in that both the winding (14; 34) and the magnet (12; 32) are in the form of right hollow cylinders of circular inside and outside cross-section.

6. A linear motor according to claim 1 or claim 2 characterised in that the magnet arrangement comprises a single magnet (12; 12, 12′), that the winding arrangement includes two windings (14a, 14b; 14a, 14b, 14a′, 14b′) which can be actuated in the same direction and which adjoin the magnets (12; 12, 12′) at the two ends thereof in such a way that the internal spaces of the windings are at least approximately aligned with the internal space of the magnet.

7. A linear motor according to claim 6 characterised in that each of the two windings (14a, 14b; 14a, 14b, 14a′, 14b′) and the magnet (12; 12, 12′) are in the form of right hollow cylinders of circular inside and outside cross-sectons.

8. A linear motor according to one of claims 1 to 7 characterised in that the core (20, 20′) is mounted movably with respect to the winding and the magnet arrangements in the direction of the linear movement and that the yokes (25, 26; 25, 25′, 26) are fixedly connected to the casing (24; 24′) which is connected to the winding and the magnet arrangements immovably at least in the direction of the linear movement.

9. A linear motor according to one of claims 1 to 7 characterised in that the casing (44) is mounted movably with respect to the winding and the magnet arrangements and that the yokes (45, 46) are fixedly connected to the core (40) which is connected to the winding and the magnet arrangements immovably at least in the direction of the linear movement.

10. A linear motor according to one of claims 1 to 7 characterised in that the core and the casing are mounted movably with respect to the winding and the magnet arrangements at least in the direction of the linear movement and that the yokes are connected to the winding and the magnet arrangements immovably at least in the direction of the linear movement.

11. A linear motor according to one of the preceding claims characterised in that the magnet arrangement is formed by permanent magnets.

12. A linear motor according to one of the preceding claims characterised in that the at least one gap (22; 42; 22′) in the element of the flux guide arrangement, which is movable relative to the winding and the magnet arrangements, is filled with a solid material of low magnetic permeability which, with the movable element, forms an overall body with continuous external contours.

13. A linear motor according to one of the preceding claims characterised in that the thickness of material and shape of the core, the yokes and the casing in the various cross-sectional regions are so matched to the magnetic flux which passes through the respective cross-sectional region at the maximum that saturation is avoided with the minimum requirement of material.

14. A linear motor according to claim 13 characterised in that the core (20′) has frustoconical openings (31) which extend coaxially relative to its longitudinal axis from its end faces and the radially extending gap (22, 22′) into same in such a way that their reduced ends face towards each other.

15. A linear motor arrangement comprising at least two linear motors (11, 11′) according to one of the preceding claims characterised in that the winding and the magnet arrangements of the at least two linear motors (11, 11′) are all connected together immovably at least in the direction of the linear movement, that there is provided at least one movable element of the flux guide arrangement, which is common for the at least two linear motors and which has a gap (22, 22′) for each of the linear motors (11, 11′), and that the winding arrangements of the at least two linear motors (11, 11′) are so actuated that the forces occurring between the winding and the magnet arrangements of each linear motor (11, 11′) and the common movable element of the flux guide arrangement act in the same direction to produce a linear movement.

16. A linear motor arrangement according to claim 15 characterised in that the at least two linear motors (11, 11′) have a common casing (24′) and that at least one (25′) of the yokes (25, 25, 26) is associated with two linear motors (11, 11′).

17. Use of a linear motor according to one of the preceding claims as an electrical generator.

## Revendications

1. Moteur électrique linéaire comprenant :
- un arrangement de bobines, qui comprend au moins une bobine (14 ; 34 ; 14a, 14b ; 14a, 14b, 14a′, 14b′), qui entoure un espace interne traversant et à travers lequel circule un courant électrique pour générer un déplacement linéaire entre un stator et une partie réactive du moteur,
- un arrangement d'aimants qui est relié fixement avec l'arrangement de bobines dans au moins la direction du déplacement linéaire à engendrer et comprend au moins un aimant (12 ; 32 ; 12, 12′), qui est réalisé sous la forme d'un corps allongé dans la direction du déplacement, dont la direction d'aimantation s'étend environ à la perpendiculaire de son axe longitudinal, qui entoure un espace intérieur traversant et qui est disposé par rapport à l'espace intérieur de ladite au moins une bobine (14 ; 34 ; 14a, 14b ; 14a, 14b, 14a′, 14b′) de manière coaxiale telle que son champ magnétique traverse l'arrangement de bobines,
- ainsi qu'un arrangement de guidage de flux, qui comprend les éléments suivants :
. un noyau (20, 40 ; 20′) qui est constitué au moins partiellement d'un matériau ferromagnétique et qui s'étend à travers l'espace intérieur de ladite au moins une bobine (14 ; 34 ; 14a, 14b ; 14a, 14b, 14a′, 14b′) et à travers l'espace intérieur dudit au moins un aimant (12 ; 32 ; 12, 12′),
. une enveloppe (24 ; 44 ; 24′) sous la forme d'un corps allongé dans la direction de déplacement, qui est constituée au moins partiellement d'un matériau ferromagnétique et qui entoure de l'extérieur les arrangements de bobine et d'aimant, et
. au moins deux culasses (25, 26 ; 25, 25′, 26′ ; 45, 46) en matériau ferromagnétique, qui réalisent transversalement à la direction de déplacement une liaison de flux magnétique entre le noyau (20; 40; 20′) et l'enveloppe (24 ; 44 ; 24′),
dans lequel au moins un des deux éléments formés par le noyau (20 ; 40 ; 20′) et l'enveloppe (24 ; 44; 24′) de l'arrangement de guidage de flux est monté mobile dans la direction de déplacement linéaire par rapport aux arrangements de bobine et d'aimant et est séparé des culasses (25, 26; 25, 25′, 26′; 45, 46) par des fentes et présente au moins une fente (22 ; 42 ; 22, 22′) s'étendant transversalement à la direction du déplacement linéaire, qui est remplie avec un matériau présentant une faible perméabilité magnétique, de sorte qu'il forme une résistance magnétique supérieure à celle des fentes adjacentes aux culasses (25, 26 ; 25, 25′, 26′; 45, 46) et celui-ci est disposé de telle sorte que le flux magnétique dans l'arrangement de bobine varie en raison de son déplacement par rapport aux arrangements de bobine et d'aimant ;
caractérisé en ce que au moins un élément mobile de l'arrangement de guidage de flux est guidé par rapport aux arrangements de bobine et d'aimant à l'aide d'éléments de guidage (21; 41; 30, 30′) réalisés en un matériau non magnétique, qui sont séparés de l'élément mobile par des entrefers, qui sont petits en comparaison auxdites fentes entre l'élément mobile et les culasses (25, 26 ; 25, 25′, 26′; 45, 46).

2. Moteur linéaire selon la revendication 1, caractérisé en ce que, aux positions de transition entre l'élément mobile de l'arrangement de guidage de flux et les culasses, est introduit un liquide ferromagnétique, avantageusement à base d'huile.

3. Moteur linéaire selon la revendication 1 ou la revendication 2, caractérisé en ce que l'arrangement de bobine comprend une seule bobine (14), qui est réalisée sous la forme d'un corps allongé dans la direction de déplacement, et en ce que l'arrangement d'aimant comprend un seul aimant (12), qui entoure la bobine (14) de l'extérieur.

4. Moteur linéaire selon la revendication 1 ou la revendication 2, caractérisé en ce que l'arrangement de bobine comprend une seule bobine (34), qui est réalisée sous la forme d'un corps allongé dans la direction de déplacement, et en ce que l'arrangement d'aimant comprend un seul aimant (32), qui est entouré de l'extérieur par la bobine (34).

5. Moteur linéaire selon l'une des revendications 3 ou 4, caractérisé en ce que la bobine (14 ; 34) ainsi que l'aimant (12 ; 32) sont réalisés sous la forme d'un cylindre creux droit avec une section transversale intérieure et extérieure circulaire.

6. Moteur linéaire selon la revendication 1 ou la revendication 2, caractérisé en ce que l'arrangement d'aimant est constitué d'un seul aimant (12 ; 12, 12′), en ce que l'arrangement de bobine comprend deux bobines (14a, 14b ; 14a, 14b, 14a′, 14b′) actionnables dans le même sens, qui se raccordent à l'aimant (12 ; 12, 12′) à ses deux extrémités frontales, de telle sorte que les espaces intérieurs des bobines sont au moins environ alignés avec l'espace intérieur de l'aimant.

7. Moteur linéaire selon la revendication 6, caractérisé en ce que chacune des deux bobines (14a, 14b ; 14a, 14b, 14a′, 14b′) et l'aimant (12 ; 12, 12′) sont réalisés sous la forme de cylindres creux droits avec des sections transversales intérieures et extérieures circulaires.

8. Moteur linéaire selon l'une des revendications 1 à 7, caractérisé en ce que le noyau (20, 20′) est monté mobile dans la direction du déplacement linéaire par rapport à l'arrangement de bobine et d'aimant et en ce que les culasses (25, 26 ; 25, 25′, 26′) sont solidement reliées à l'enveloppe (24, 24′), qui est reliée fixement à l'arrangement de bobine et d'aimant au moins en direction du déplacement linéaire.

9. Moteur linéaire selon l'une des revendications 1 à 7, caractérisé en ce que l'enveloppe (44) est montée mobile par rapport à l'arrangement de bobine et d'aimant et en ce que les culasses (45, 46) sont solidement reliées au noyau (40), qui est relié fixement à l'arrangement de bobine et d'aimant au moins en direction du déplacement linéaire.

10. Moteur linéaire selon l'une des revendications 1 à 7, caractérisé en ce que le noyau et l'enveloppe sont montés mobiles par rapport à l'arrangement de bobine et d'aimant au moins en direction du déplacement linéaire, et en ce que les culasses sont reliées fixement avec l'arrangement de bobine et d'aimant au moins en direction du déplacement linéaire.

11. Moteur linéaire selon l'une quelconque des revendications précédentes, caractérisé en ce que l'arrangement d'aimant est formé d'aimants permanents.

12. Moteur linéaire selon l'une quelconque des revendications précédentes, caractérisé en ce que ladite au moins une fente (22 ; 42 ; 22′) dans l'élément mobile par rapport à l'arrangement de bobine et d'aimant d'arrangement de guidage de flux est remplie avec un matériau solide présentant une faible perméabilité magnétique, qui forme avec l'élément mobile un corps global avec un profil extérieur continu.

13. Moteur linéaire selon l'une quelconque des revendications précédentes, caractérisé en ce que l'épaisseur de matériau et la forme du noyau, des culasses et de l'enveloppe dans les différentes zones de section transversale sont adaptées au flux magnétique maximal traversant la zone de section transversale respective de telle sorte qu'avec une utilisation de matériau la plus faible possible, une saturation est évitée.

14. Moteur linéaire selon la revendication 13, caractérisé en ce que le noyau (20′) présente des évidements tronconiques (31), qui s'étendent vers l'intérieur de celui-ci de manière coaxiale à son axe longitudinal à partir de ses sufaces frontales et de la fente s'étendant radialement (22, 22′) de telle sorte que ses extrémités réduites se font face.

15. Arrangement de moteur linéaire, comprenant au moins deux moteurs linéaires (11, 11′) selon l'une quelconque des revendications précédentes, caractérisé en ce que les arrangements de bobine et d'aimant desdits au moins deux moteurs linéaires (11, 11′) sont tous reliés ensemble de manière fixe au moins en direction du déplacement linéaire, en ce qu'au moins un élément mobile commun de l'arrangement de guidage de flux est prévu pour lesdits au moins deux moteurs linéaires, ledit élément mobile présentant une fente (22, 22′) pour chacun des moteurs linéaires (11, 11′), et en ce que l'arrangement de bobine desdits au moins deux moteurs linéaires (11, 11′) est commandé de telle sorte les forces générées entre l'arrangement de bobine et d'aimant de chaque moteur linéaire (11, 11′) et l'élément mobile commun de l'arrangement de guidage de flux agissent pour produire un déplacement linéaire dans le même sens.

16. Arrangement de moteur linéaire selon la revendication 15, caractérisé en ce que lesdits au moins deux moteurs linéaires (11, 11′) présentent une enveloppe commune (24′) et en ce qu'il est associé deux moteurs linéaires (11,11′) à au moins une (25′) des culasses (25, 25′, 26).

17. Utilisation d'un moteur linéaire selon l'une des revendications précédentes en tant que générateur électrique.
